# FASCICULE DE BREVET EUROPEEN

(11) **EP 2 598 796 B1**
(45) Date de publication et mention de la délivrance du brevet: **10.05.2017**
(21) Numéro de dépôt: 11734146.1
(22) Date de dépôt: 22.07.2011
(51) Int. Cl.: F21V 29/60

(54) **MODULE OPTIQUE DE DISPOSITIF D'ÉCLAIRAGE ET/OU DE SIGNALISATION D'UN VÉHICULE AUTOMOBILE**
OPTISCHES MODUL EINER BELEUCHTUNGS- UND/ODER SIGNALISIERUNGSVORRICHTUNG EINES KRAFTFAHRZEUGES
OPTICAL MODULE OF AN ILLUMINATING AND/OR SIGNALLING DEVICE OF A MOTOR VEHICLE

(30) Priorité: 26.07.2010 FR 1056095
(43) Date de publication de la demande: 05.06.2013
(60) Demande divisionnaire: 17164229.1
(73) Titulaire: Valeo Vision, 93012 Bobigny Cedex (FR)
(72) Inventeur: THULLIER, Christophe, F-78180 Montigny Le Bretonneux (FR); CANONNE, Thomas, F-78300 Poissy (FR); BIARNE, Vincent, F-93270 Sevran (FR)
(86) Numéro de dépôt international: PCT/EP2011/062618
(87) Numéro de publication internationale: WO 2012/013591

(56) Documents cités:
- EP-A2- 2 194 312
- WO-A1-2005/116520
- FR-A1- 2 853 717
- FR-A1- 2 861 833
- FR-A1- 2 863 343
- US-A1- 2009 303 742
- US-A1- 2010 073 950

## Description

La présente invention concerne un module optique d'un dispositif d'éclairage et/ou de signalisation d'un véhicule automobile.

Il est connu, par exemple des documents US 2009/303 742 et WO 2005/116 520 de réaliser des dispositifs d'éclairage dans lesquels la source de lumière est montée sur un radiateur sur lequel est dirigé un flux d'air, de sorte qu'une partie de la chaleur produite par la source de lumière soit dissipée par le radiateur dans le flux d'air. Ceci est en particulier le cas lorsque la source de lumière est du type à diode électroluminescente. On peut ainsi obtenir des dispositifs d'éclairage performants. Cependant, de tels dispositifs présentent des inconvénients. Ils ont des structures complexes et sont donc compliqués à assembler. En outre, il est nécessaire de mettre en place des tolérances sur de nombreuses pièces qui doivent être montées les unes avec les autres. Les chaînes de cotes des différentes pièces sont donc également complexes dans ces dispositifs. Le document EP 2 194 312 A2 divulgue un module optique de dispositif d'éclairage d'un véhicule automobile selon le préambule de la revendication 1. Le but de l'invention est de fournir un module optique de dispositif d'éclairage et/ou de signalisation remédiant aux inconvénients précédemment mentionnés et améliorant les modules optiques connus de l'art antérieur. En particulier, l'invention propose un module optique de structure simple et dans lequel les chaînes de cotes sont également simples. Selon l'invention, le module optique de dispositif d'éclairage et/ou de signalisation d'un véhicule automobile, comprenant un support, une lentille optique et un échangeur thermique. La lentille optique et l'échangeur thermique sont fixés audit support et le support relie la lentille optique à l'échangeur thermique. De préférence, le support supporte directement la lentille et supporte directement l'échangeur thermique. Ainsi, il est possible de réaliser un module optique simple et facile à assembler, les chaînes de cotes des différents composants étant elles aussi simples.

Le support peut être destiné à être monté directement ou indirectement sur le boîtier du dispositif d'éclairage et/ou de signalisation et à l'intérieur de ce boîtier.

Le support peut également supporter un ventilateur et/ou au moins un réflecteur de lumière et/ou une plieuse et/ou un moyen de canalisation d'air. De préférence, le support supporte directement le ventilateur et/ou l'au moins un réflecteur de lumière et/ou la plieuse et/ou le moyen de canalisation d'air. Ainsi, le module optique est encore simplifié et son assemblage est encore facilité.

Le support peut comprendre des moyens de positionnement de la lentille optique et/ou du ventilateur et/ou de l'au moins un réflecteur de lumière et/ou de la plieuse et/ou de l'échangeur thermique, ces moyens coopérant avec des moyens de positionnement prévus sur la lentille optique et/ou sur le ventilateur et/ou sur l'au moins un réflecteur de lumière et/ou sur la plieuse et/ou sur l'échangeur thermique.

Le module optique peut comprendre une première et une deuxième sources de lumière destinées à assurer deux fonctions distinctes d'éclairage et/ou de signalisation. Les première et deuxième sources peuvent ensemble être destinées à assurer une fonction d'éclairage de type feu de route et la deuxième source seule peut être destinée à assurer une fonction d'éclairage de type feu de croisement.

Le module optique peut comprendre une source de lumière destinée à assurer une fonction antibrouillard.

Le supports est apte à être monté en rotation dans un boîtier de dispositif d'éclairage et/ou de signalisation d'un véhicule automobile.. Ainsi, il est possible d'orienter l'axe du module optique en fonction de courbes négociées par le véhicule.

Le module optique comprend une embase destinée à être fixée au boîtier de dispositif d'éclairage et/ou de signalisation du véhicule automobile et comprenant des premiers moyens d'articulation destinés à être solidarisés au support de sorte à permettre la rotation du support par rapport au boîtier. Le support comprend un tenon destiné à coopérer avec un orifice de l'embase, par exemple un tenon au sommet du support et un en dessous, l'axe passant par ces tenons correspondant à l'axe de rotation du module par rapport au boîtier. L'embase peut comprendre un mécanisme de manoeuvre destiné à orienter le support relativement au boîtier. Selon un exemple de réalisation, l'embase peut comprendre un mécanisme d'entraînement, d'où sort un axe d'entraînement coopérant avec un orifice du module, préférentiellement du support, de manière à entraîner le support en rotation. En variante, et tel qu'illustré, le support peut être indirectement relié à l'embase par une pièce intermédiaire, par exemple un cadre. Le support peut alors comprendre des pattes de fixation fixées au cadre. Le cadre comprend dans ce cas les moyens coopérant avec les premiers moyens d'articulation de l'embase, par exemple un tenon en haut et un orifice en bas, le tenon tournant dans l'orifice supérieur de l'embase et l'orifice recevant l'axe d'entraînement.

La lentille optique peut être positionnée et fixée au support dans la partie avant de ce dernier et l'échangeur thermique peut être positionné et fixé au support sous ce dernier.

Le module optique peut comprendre une première et une deuxième source lumineuse positionnées et fixées sur l'échangeur thermique.

Le module optique peut comprendre un premier réflecteur positionné relativement au support et fixé au support, sous le support, entre le support et l'échangeur thermique.

Le module optique peut comprendre un deuxième réflecteur positionné relativement au support et fixé au support, sous le support et l'échangeur thermique.

Le module optique peut comprendre une plieuse positionnée et fixée sur le support.

Le module optique peut comprendre un ventilateur positionné et fixé sur le support, par exemple au dessus du support et/ou en arrière de celui-ci.

Le dispositif d'éclairage et/ou de signalisation peut comprendre un boîtier dans lequel est monté le support.

L'invention porte également sur un véhicule automobile comprenant un dispositif d'éclairage et/ou de signalisation tel que défini précédemment.

Le dessin annexé représente, à titre d'exemples, deux modes de réalisation d'un module optique d'un véhicule automobile selon l'invention.
La figure 1 est une vue éclatée d'un premier mode de réalisation d'un module optique selon l'invention.
La figure 2 est une coupe longitudinale du premier mode de réalisation du module optique selon l'invention.
La figure 3 est une section longitudinale du premier mode de réalisation du module optique selon l'invention.
La figure 4 est une vue éclatée d'un deuxième mode de réalisation du module optique selon l'invention.
La figure 5 est une vue en perspective du deuxième mode de réalisation du module optique selon l'invention.

Un premier mode de réalisation d'un module optique 1 dispositif d'éclairage et/ou de signalisation est décrit ci-après en référence aux figures en 1 à 3. Dans cet exemple, le module optique de dispositif d'éclairage et/ou de signalisation est un module optique 1 à deux fonctions :
- une fonction d'éclairage de type feu de croisement, et
- une fonction d'éclairage de type feu de route.

Le module optique 1 comprend principalement un support 2, une lentille optique 3, un ventilateur 5, un échangeur thermique, comme un radiateur 4, un premier réflecteur 6, un deuxième réflecteur 7 et une plieuse 8.

Le support comprend des moyens 30 pour positionner et pour fixer la lentille optique 3 sur le support. Ces moyens coopèrent avec des moyens 31 de positionnement et de fixation prévus sur la lentille optique 3. La lentille optique est ainsi supportée par le support. De préférence, la lentille optique est supportée directement par le support.

Le support comprend des moyens 32 pour positionner et pour fixer le radiateur 4 sur le support. Ces moyens coopèrent avec des moyens 33 de positionnement et de fixation prévus sur le radiateur. Le radiateur est ainsi supporté par le support. De préférence, le radiateur est supporté directement par le support.

Le support comprend des moyens 34 pour positionner et pour fixer le ventilateur 5 sur le support. Ces moyens coopèrent avec des moyens 35 de positionnement et de fixation prévus sur le ventilateur. Le ventilateur est ainsi supporté par le support. De préférence, le ventilateur est supporté directement par le support.

Le support comprend des moyens 36 pour positionner et pour fixer le premier réflecteur 6 sur le support. Ces moyens 37 coopèrent avec des moyens de positionnement et de fixation prévus sur le premier réflecteur 6. Alternativement, le support peut ne présenter que des moyens de fixation du premier réflecteur 6 sur le support. Des moyens de positionnement peuvent être prévus sur le premier réflecteur pour coopérer avec des moyens de positionnement sur le radiateur ou sur une première source de lumière, de sorte à positionner le premier réflecteur relativement à la première source de lumière. Le premier réflecteur est ainsi supporté par le support. De préférence, le premier réflecteur est supporté directement par le support. Alternativement encore, le premier réflecteur peut être positionné sur le radiateur et supporté par le radiateur.

Le support comprend des moyens 38 pour positionner et pour fixer le deuxième réflecteur 7 sur le support. Ces moyens coopèrent avec des moyens 39 de positionnement et de fixation prévus sur le deuxième réflecteur 7. Alternativement, le support peut ne présenter que des moyens de fixation du deuxième réflecteur 7 sur le support. Des moyens de positionnement peuvent être prévus sur le deuxième réflecteur pour coopérer avec des moyens de positionnement sur le radiateur ou sur une deuxième source de lumière, de sorte à positionner le deuxième réflecteur relativement à la deuxième source de lumière. Le deuxième réflecteur est ainsi supporté par le support. De préférence, le deuxième réflecteur est supporté directement par le support. Alternativement encore, le deuxième réflecteur peut être positionné sur le radiateur et supporté par le radiateur.

Le support comprend des moyens pour positionner et pour fixer la plieuse 8 sur le support. Ces moyens coopèrent avec des moyens de positionnement et de fixation prévus sur la plieuse 8. Alternativement, le support peut ne présenter que des moyens de fixation de la plieuse 8 sur le support. Des moyens de positionnement peuvent être prévus sur la plieuse pour coopérer avec des moyens de positionnement sur le radiateur ou sur la première source de lumière, de sorte à positionner la plieuse relativement à la première source de lumière. La plieuse est ainsi supportée par le support. De préférence, la plieuse est supportée directement par le support. Alternativement encore, la plieuse peut être positionnée sur le radiateur et supportée par le radiateur.

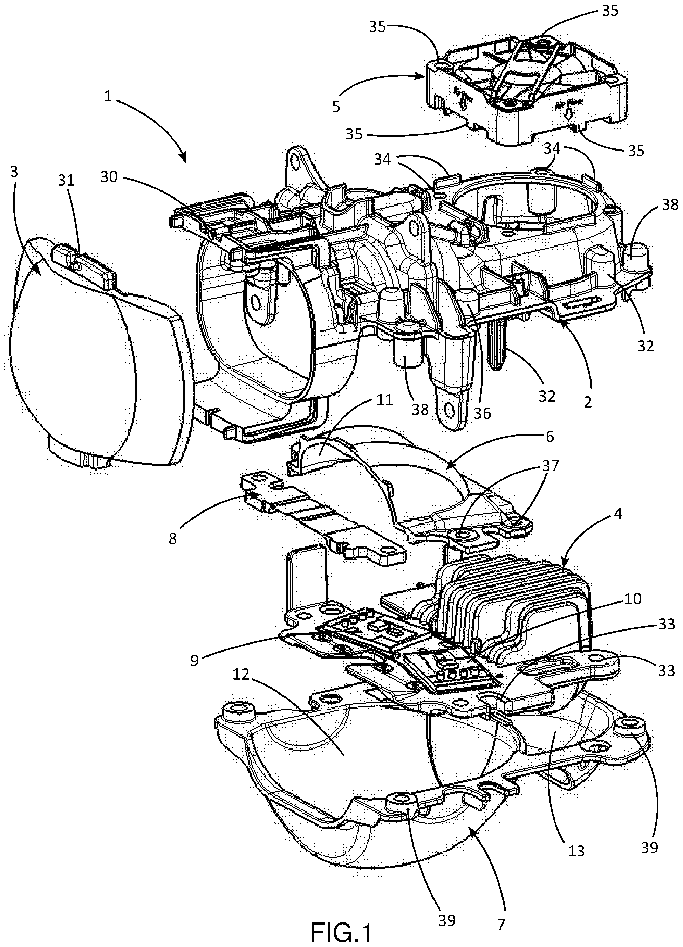

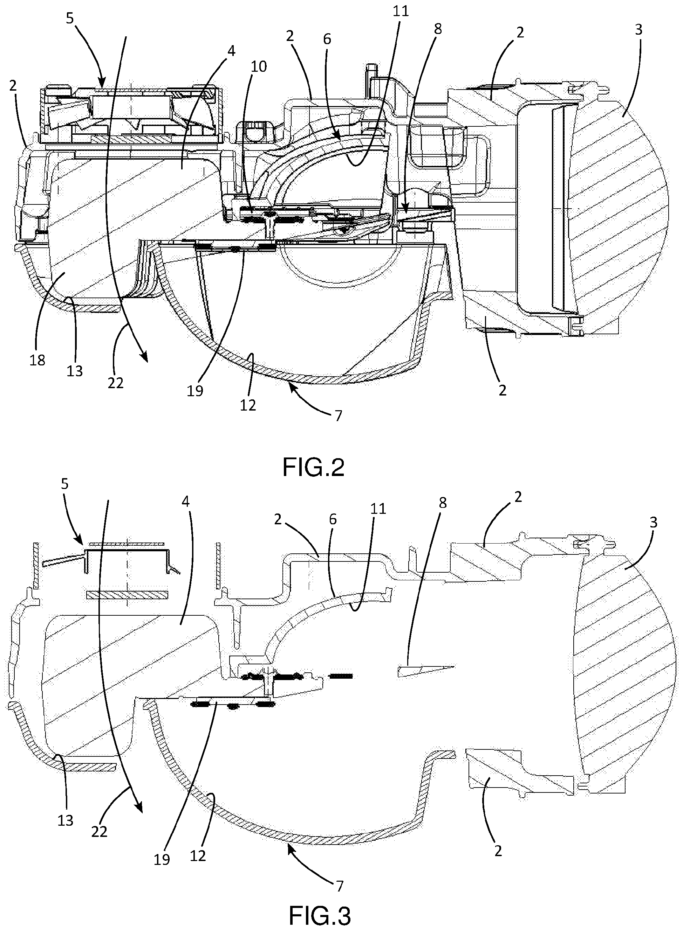

Le support comprend des moyens 38 pour positionner et pour fixer un guide 13 de flux d'air sur le support. Ces moyens coopèrent avec des moyens 39 de positionnement et de fixation prévus sur le guide 13. Alternativement, le guide de flux d'air peut être solidaire du deuxième réflecteur, comme sur les figures 1 à 5. Le guide d'air est ainsi supporté par le support. De préférence, le guide est supporté directement par le support.

De préférence, la première source de lumière comprend une première diode électroluminescente montée sur un premier circuit imprimé 9 et une deuxième diode électroluminescente montée sur un deuxième circuit imprimé 10. Ces circuits imprimés 9 et 10 sont de préférence positionnés et fixés sur le radiateur 4. Les faisceaux lumineux émis par la première source sont réfléchis par une surface réfléchissante 11 du premier réflecteur avant d'être partiellement réfléchis par la plieuse 8 et déviés par la lentille optique 3. Ces différents éléments constituent un premier système optique permettant de générer un faisceau lumineux à coupure de type feu de croisement. De préférence, la surface réfléchissante 11 présente une première portion en forme d'ellipsoïde et une deuxième portion en forme d'ellipsoïde, la première diode se trouvant au moins sensiblement au premier foyer de la première portion ellipsoïdale, la deuxième diode se trouvant au moins sensiblement au premier foyer de la deuxième portion ellipsoïdale et la plieuse se trouvant au moins sensiblement au niveau des deuxièmes foyers des première et deuxième portions ellipsoïdales. La plieuse se trouve de préférence également au niveau du foyer de la lentille optique 3.

De préférence, la deuxième source de lumière comprend une troisième diode électroluminescente montée sur un troisième circuit imprimé 19. Ce circuit imprimé 19 est de préférence positionné et fixé sur le radiateur 4. Les faisceaux lumineux émis par la deuxième source sont réfléchis par une surface réfléchissante 12 du deuxième réflecteur 7 avant d'être déviés par la lentille optique 3. Ces différents éléments constituent un deuxième système optique permettant de générer une partie complémentaire du faisceau lumineux généré par le premier système optique de sorte que les premier et deuxième faisceaux produisent complémentairement un faisceau lumineux de type feu de route. De préférence, la surface réfléchissante 12 est en forme d'ellipsoïde. La troisième diode se trouve au moins sensiblement au premier foyer de la surface réfléchissante 12 et le foyer de la lentille optique 3 se trouvant au moins sensiblement au niveau du deuxième foyer de la surface réfléchissante 12.

Compte tenu de la structure des systèmes optiques décrits précédemment, on comprend qu'il est important que les différents composants des systèmes optiques, à savoir : sources de lumière, réflecteurs, plieuse et lentille optique soient positionnés précisément les uns par rapport aux autres. Pour ce faire, plusieurs solutions existent. Notamment, on peut positionner la lentille par rapport au support, positionner les réflecteurs par rapport au support, positionner les sources de lumière par rapport au radiateur et positionner le radiateur par rapport au support. Dans cet exemple, la chaîne de cotes positionnant les sources de lumière par rapport aux réflecteurs ou par rapport à la lentille optique passent par le radiateur et le support. Alternativement, on peut positionner la lentille par rapport au support, positionner les réflecteurs par rapport au radiateur, positionner les sources de lumière par rapport au radiateur et positionner le radiateur par rapport au support. Dans ce dernier exemple, la chaîne de cotes positionnant les sources de lumière par rapport aux réflecteurs ne passent plus que par le radiateur.

Avantageusement, dans toutes les variantes, les différents composants des systèmes optiques sont supportés par le support indirectement ou, de préférence, directement.

Le ventilateur permet de créer un flux d'air 22 s'écoulant entre des ailettes 18 du radiateur et canalisé par un guide 13 pour optimiser l'échange thermique entre l'air et le radiateur.

De préférence, les différents circuits imprimés portant les diodes électroluminescentes sont fixés sur le radiateur et positionnés par rapport au radiateur. Ils sont donc indirectement supportés par le support 2, le radiateur étant fixé sur le support.

Le support présente par ailleurs des moyens de fixation permettant sa fixation à une structure du véhicule automobile. De préférence, les moyens de fixation permettent sa fixation dans un boîtier de dispositif d'éclairage et/ou de signalisation, ce boîtier présentant par ailleurs des moyens de fixation à la structure du véhicule automobile. Le support est de préférence réalisé par moulage. Il est par exemple réalisé en métal ou en plastique, notamment en composite.

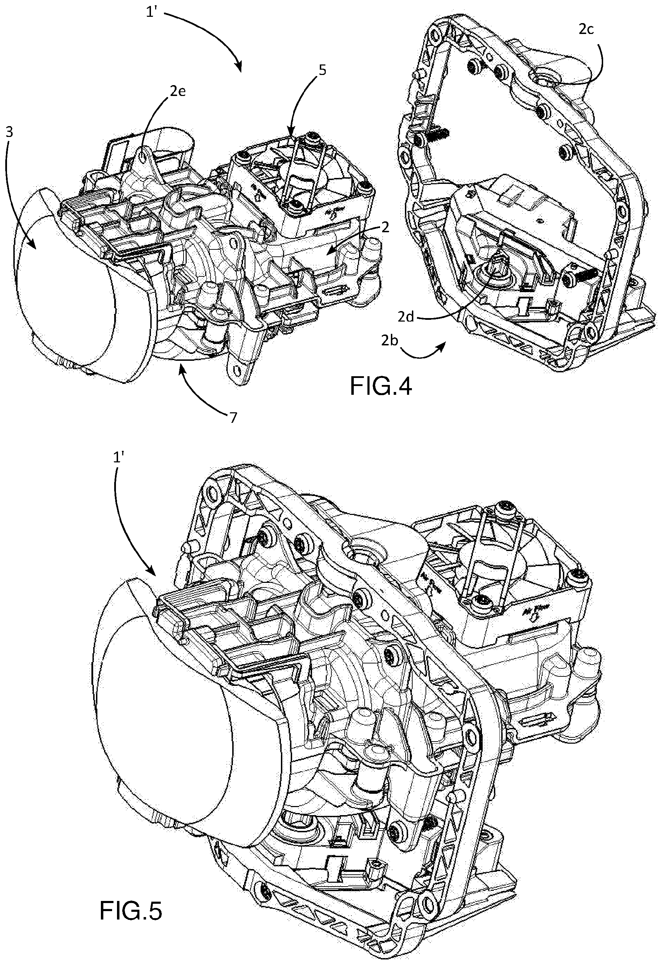

Un deuxième mode de réalisation du module optique selon l'invention est décrit ci-après en référence aux figures 4 et 5. Il ne diffère du premier mode de réalisation que dans la structure du support 2. En effet, dans ce deuxième mode de réalisation, le support 2 comprend des premiers moyens d'articulation 2c qui coopère avec des deuxièmes moyens d'articulation sur une embase 2b destinée à être fixée dans un boîtier du dispositif d'éclairage et/ou de signalisation. Ainsi, le support et donc le module optique peut être orienté relativement au boîtier. L'embase forme par exemple un cadre dans lequel le support est articulé. Cette articulation est par exemple réalisée selon un axe vertical, par exemple par une liaison pivot. Ainsi, une fonction de modification de la direction de l'axe optique du dispositif d'éclairage et/ou de signalisation peut être réalisée lorsque le véhicule automobile négocie une courbe. L'embase peut aussi comprendre un moyen de manoeuvre comme un motoréducteur permettant de piloter l'orientation du support et donc celle du module optique. Le support comprend comme premiers moyens d'articulation un tenon (non représenté), par exemple un tenon au sommet du support et un tenon en dessous, l'axe passant par ces tenons correspondant à l'axe de rotation du module par rapport au boîtier. L'embase comprend comme deuxièmes moyens d'articulation des orifices destinés à coopérer avec les tenons. Selon une variante, l'embase 2b comprend un mécanisme d'entraînement, d'où sort un axe d'entraînement 2d coopérant avec un orifice du module, préférentiellement du support 2, de manière à entraîner le support 2 en rotation. En variante, et tel qu'illustré, le support 2 peut être indirectement relié à l'embase 2b par une pièce intermédiaire (non représentée par souci de clarté), par exemple un cadre. Le support peut alors comprendre des pattes de fixation 2e fixées au cadre. Le cadre comprend alors des moyens coopérant avec les deuxièmes moyens d'articulation de l'embase, par exemple un tenon en haut et un orifice en bas, le tenon tournant dans l'orifice supérieur 2c de l'embase et l'orifice recevant l'axe d'entrainement 2d.

Dans tout ce document, on entend, par « supporter un composant », l'action de reprendre les efforts exercés sur le composant et de les transmettre à la structure du véhicule automobile, les efforts étant notamment ceux, à distance, dus à des forces d'accélération comme le poids. En outre, une pièce supportant « directement » un composant reprend directement les efforts exercés sur le composant et les transmet à la structure du véhicule automobile, c'est-à-dire qu'il n'y a pas de pièce intermédiaire transmettant les efforts entre le composant et la pièce. Alternativement, une pièce intermédiaire peut être prévue si sa seule fonction est une fonction d'interface. Dans ce dernier cas, malgré la pièce intermédiaire, on considère que la pièce supporte directement le composant.

Dans les différents modes de réalisation, le module optique assure une première fonction feu de croisement et une deuxième fonction feu de route. Cependant, le module optique selon l'invention peut assurer toute autre fonction en remplacement de l'une et/ou de l'autre des première et deuxième fonctions. Le module optique selon l'invention peut également n'assurer qu'une seule fonction d'éclairage et/ou de signalisation, comme une fonction antibrouillard.

Dans tout ce texte, le terme « au moins sensiblement » utilisé avec différents *adjectifs* signifie : « *adjectif* » ou « sensiblement *adjectif* », par exemple « au moins sensiblement perpendiculaire » signifie « perpendiculaire » ou « sensiblement perpendiculaire ».

## Revendications

1. Module optique (1 ; 1') de dispositif d'éclairage et/ou de signalisation d'un véhicule automobile, comprenant un support (2), une lentille optique (3) et un échangeur thermique (4) dans lequel la lentille optique (3) et l'échangeur thermique (4) sont fixés audit support et ledit support relie la lentille optique audit échangeur thermique et le support (2) est apte à être monté en rotation dans un boîtier de dispositif d'éclairage et/ou de signalisation d'un véhicule automobile ; **caractérisé en ce qu'**il comprend une embase (2b) destinée à être fixée au boîtier de dispositif d'éclairage et/ou de signalisation du véhicule automobile et comprenant des premiers moyens d'articulation (2c) destinés à être solidarisés au support de sorte à permettre la rotation du support (2) par rapport au boîtier et **en ce que** le support comprend un tenon destiné à coopérer avec un orifice de l'embase, par exemple un tenon au sommet du support et un en dessous, l'axe passant par ces tenons correspondant à l'axe de rotation du module par rapport au boîtier.

2. Module optique selon la revendication 1, **caractérisé en ce que** ledit support (2) est destiné à être monté directement ou indirectement sur le boîtier du dispositif (1 ; 1') d'éclairage et/ou de signalisation et à l'intérieur de ce boîtier.

3. Module optique selon la revendication 1 ou 2, **caractérisé en ce que** le support supporte un ventilateur (5) et/ou au moins un réflecteur (6, 7) de lumière et/ou une plieuse (8) et/ou un moyen (13) de canalisation d'air.

4. Module optique selon la revendication 3, **caractérisé en ce que** le support relie l'échangeur thermique au ventilateur (5) et/ou au réflecteur (6, 7) de lumière et/ou à une plieuse (8) et/ou à un moyen (13) de canalisation d'air.

5. Module optique selon l'une des revendications précédentes, **caractérisé en ce que** le support comprend des moyens de positionnement de la lentille optique et/ou du ventilateur et/ou de l'au moins un réflecteur de lumière et/ou de la plieuse et/ou de l'échangeur thermique, ces moyens coopérant avec des moyens de positionnement prévus sur la lentille optique et/ou sur le ventilateur et/ou sur l'au moins un réflecteur de lumière et/ou sur la plieuse et/ou sur l'échangeur thermique.

6. Module optique selon l'une des revendications précédentes, **caractérisé en ce qu'**il comprend une première et une deuxième sources de lumière destinées à assurer deux fonctions distinctes d'éclairage et/ou de signalisation.

7. Module optique selon la revendication précédente, **caractérisé en ce que** la première source est destinée à assurer une fonction d'éclairage de type feu de route en coopération avec la deuxième source et **en ce que** la deuxième source est destinée à assurer seule une fonction d'éclairage de type feu de croisement.

8. Module optique selon l'une des revendications précédentes, **caractérisé en ce que** la lentille optique (3) est positionnée et fixée au support dans la partie avant de ce dernier et **en ce que** l'échangeur thermique (4) est positionné et fixé au support sous ce dernier.

9. Module optique selon la revendication précédente, **caractérisé en ce qu'**il comprend une première (9, 10) et une deuxième source lumineuse positionnées et fixées sur l'échangeur thermique.

10. Module optique selon la revendication précédente, **caractérisé en ce qu'**il comprend un premier réflecteur (6) positionné relativement au support et fixé au support, sous le support, entre le support et l'échangeur thermique.

11. Module optique selon la revendication 9 ou 10, **caractérisé en ce qu'**il comprend un deuxième réflecteur (7) positionné relativement au support et fixé au support, sous le support et l'échangeur thermique.

12. Module optique selon l'une des revendications 8 à 11, **caractérisé en ce qu'**il comprend une plieuse positionnée et fixée sur le support.

13. Module optique selon l'une des revendications 8 à 12, **caractérisé en ce qu'**il comprend un ventilateur positionné et fixé sur le support, par exemple au dessus du support et/ou en arrière de celui-ci.

14. Dispositif d'éclairage et/ou de signalisation, comprenant un module optique (1 ; 1') selon l'une des revendications précédentes.

## Patentansprüche

1. Optikmodul (1; 1') einer Kraftfahrzeug-Beleuchtungs- und/oder -Signalgebungsvorrichtung, mit einem Träger (2), einer optischen Linse (3) und einem Wärmetauscher (4), wobei die optische Linse (3) und der Wärmetauscher (4) am Träger befestigt sind und der Träger die optische Linse mit dem Wärmetauscher verbindet und der Träger (2) zur drehbeweglichen Montage in einem Gehäuse einer Kraftfahrzeug-Beleuchtungs- und/oder -Signalgebungsvorrichtung ausgestaltet ist,
**dadurch gekennzeichnet, dass** es einen Sockel (2b) umfasst, der dazu bestimmt ist, am Gehäuse der Kraftfahrzeug-Beleuchtungs- und/oder -Signalgebungsvorrichtung befestigt zu werden, und der erste Schwenkmittel (2c) umfasst, die dazu bestimmt sind, am Träger solchermaßen befestigt zu werden, dass das Drehen des Trägers (2) bezüglich des Gehäuses möglich ist, und dass der Träger einen Zapfen aufweist, der dazu bestimmt ist, mit einer Öffnung des Sockels zusammenzuwirken, zum Beispiel einen Zapfen am höchsten Punkt des Trägers und einen darunter, wobei die durch diese Zapfen verlaufende Achse der Drehachse des Moduls bezüglich des Gehäuses entspricht.

2. Optikmodul nach Anspruch 1,
**dadurch gekennzeichnet, dass** der Träger (2) dazu bestimmt ist, unmittelbar oder mittelbar auf dem Gehäuse der Beleuchtungs- und/oder Signalgebungsvorrichtung (1; 1') und innen im Gehäuse montiert zu werden.

3. Optikmodul nach Anspruch 1 oder 2,
**dadurch gekennzeichnet, dass** der Träger einen Lüfter (5) und/oder wenigstens einen Lichtreflektor (6, 7) und/oder eine Ablenkfläche (8) und/oder ein Mittel (13) zum Lenken der Luft trägt.

4. Optikmodul nach Anspruch 3,
**dadurch gekennzeichnet, dass** der Träger den Wärmetauscher mit dem Lüfter (5) und/oder dem Lichtreflektor (6, 7) und/oder der Ablenkfläche (8) und/oder einem Mittel (13) zum Lenken der Luft verbindet.

5. Optikmodul nach einem der vorhergehenden Ansprüche,
**dadurch gekennzeichnet, dass** der Träger Mittel zum Positionieren der optischen Linse und/oder des Lüfters und/oder des wenigstens einen Lichtreflektors und/oder der Ablenkfläche und/oder des Wärmetauschers umfasst, wobei diese Mittel mit Positionierungsmitteln zusammenwirken, die auf der optischen Linse und/oder dem Lüfter und/oder dem wenigstens einen Lichtreflektor und/oder der Ablenkfläche und/oder dem Wärmetauscher vorgesehen sind.

6. Optikmodul nach einem der vorhergehenden Ansprüche,
**dadurch gekennzeichnet, dass** es eine erste und eine zweite Lichtquelle umfasst, die dazu bestimmt sind, zwei verschiedene Licht- und/oder Signalfunktionen auszuführen.

7. Optikmodul nach dem vorhergehenden Anspruch,
**dadurch gekennzeichnet, dass** die erste Lichtquelle dazu bestimmt ist, eine Lichtfunktion vom Typ Fernlicht im Zusammenwirken mit der zweiten Lichtquelle auszuführen, und dass die zweite Lichtquelle dazu bestimmt ist, eine Lichtfunktion vom Typ Abblendlicht alleine auszuführen.

8. Optikmodul nach einem der vorhergehenden Ansprüche,
**dadurch gekennzeichnet, dass** die optische Linse (3) auf dem Träger in dessen vorderem Teil angeordnet und befestigt ist, und dass der Wärmetauscher (4) unterhalb des Trägers an letzterem angeordnet und befestigt ist.

9. Optikmodul nach dem vorhergehenden Anspruch,
**dadurch gekennzeichnet, dass** es eine erste (9, 10) und eine zweite Lichtquelle umfasst, die auf dem Wärmetauscher angeordnet und befestigt sind.

10. Optikmodul nach dem vorhergehenden Anspruch,
**dadurch gekennzeichnet, dass** es einen ersten Reflektor (6) umfasst, der relativ zum Träger angeordnet und am Träger, unterhalb des Trägers, zwischen dem Träger und dem Wärmetauscher befestigt ist.

11. Optikmodul nach Anspruch 9 oder 10,
**dadurch gekennzeichnet, dass** es einen zweiten Reflektor (7) umfasst, der relativ zum Träger angeordnet und am Träger unterhalb des Trägers und des Wärmetauschers befestigt ist.

12. Optikmodul nach einem der Ansprüche 8 bis 11,
**dadurch gekennzeichnet, dass** es eine Ablenkfläche umfasst, die auf dem Träger angeordnet und befestigt ist.

13. Optikmodul nach einem der Ansprüche 8 bis 12,
**dadurch gekennzeichnet, dass** es einen Lüfter umfasst, der auf dem Träger angeordnet und befestigt ist, zum Beispiel oberhalb des Trägers und/oder hinter diesem.

14. Beleuchtungs- und/oder Signalgebungsvorrichtung mit einem Optikmodul (1, 1') nach einem der vorhergehenden Ansprüche.

## Claims

1. Optical module (1; 1') for a lighting and/or signalling device of a motor vehicle, comprising a support (2), an optical lens (3) and a heat exchanger (4), wherein the optical lens (3) and the heat exchanger (4) are secured on the said support, and the said support connects the optical lens to the said heat exchanger, and the support (2) can be fitted such as to rotate in a housing of a lighting and/or signalling device of a motor vehicle;
**characterised in that** it comprises a base (2b) which is designed to be secured on the housing of the lighting and/or signalling device of the motor vehicle, and comprising first means for articulation (2c) which are designed to be rendered integral with the support, such as to permit the rotation of the support (2) relative to the housing, and **in that** the support comprises a tenon which is designed to cooperate with an orifice in the base, for example one tenon at the top of the support and one below, with the axis which passes via these tenons corresponding to the axis of rotation of the module relative to the housing.

2. Optical module according to claim 1, **characterised in that** the said support (2) is designed to be fitted directly or indirectly on the housing of the lighting and/or signalling device (1; 1') and in the interior of this housing.

3. Optical module according to claim 1 or 2, **characterised in that** the support supports a fan (5) and/or at least one light reflector (6, 7) and/or a bender (8) and/or a means (13) for channelling of air.

4. Optical module according to claim 3, **characterised in that** the support connects the heat exchanger to the fan (5) and/or to the light reflector (6, 7) and/or to a bender (8) and/or to a means (13) for channelling of air.

5. Optical module according to one of the preceding claims, **characterised in that** the support comprises means for positioning the optical lens and/or the fan and/or the at least one light reflector and/or the bender and/or the heat exchanger, these means cooperating with positioning means which are provided on the optical lens and/or on the fan and/or on the at least one light reflector and/or on the bender and/or on the heat exchanger.

6. Optical module according to one of the preceding claims, **characterised in that** it comprises a first and a second source of light which are designed to ensure two distinct lighting and/or signalling functions.

7. Optical module according to the preceding claim, **characterised in that** the first source is designed to ensure a lighting function of the high-beam type in co-operation with the second source, and **in that** the second source is designed to ensure only a lighting function of the low-beam type.

8. Optical module according to one of the preceding claims, **characterised in that** the optical lens (3) is positioned and secured on the support in the front part of the latter, and **in that** the heat exchanger (4) is positioned and secured on the support below the latter.

9. Optical module according to the preceding claim, **characterised in that** it comprises a first (9, 10) and a second source of light which are positioned and secured on the heat exchanger.

10. Optical module according to the preceding claim, **characterised in that** it comprises a first reflector (6) which is positioned relative to the support and secured on the support, below the support, between the support and the heat exchanger.

11. Optical module according to claim 9 or 10, **characterised in that** it comprises a second reflector (7) which is positioned relative to the support and secured on the support, below the support and the heat exchanger.

12. Optical module according to one of claims 8 to 11, **characterised in that** it comprises a bender which is positioned and secured on the support.

13. Optical module according to one of claims 8 to 12, **characterised in that** it comprises a fan which is positioned and secured on the support, for example above the support and/or at the rear of it.

14. Lighting and/or signalling device, comprising an optical module (1; 1') according to one of the preceding claims.
